# EUROPEAN PATENT APPLICATION

(11) **EP 3 653 487 A1**
(43) Date of publication of application: **20.05.2020**
(21) Application number: 18831271.4
(22) Date of filing: 09.07.2018
(51) Int. Cl.: B63C 9/08, B63C 9/13, B63C 9/20

(54) **AUTONOMOUS LIFE RING**

(30) Priority: 14.07.2017 BG 11254217
(71) Applicant: Mitev, Gancho Mitev, 8000 Burgas (BG)
(72) Inventor: Mitev, Gancho Mitev, 8000 Burgas (BG)
(86) International application number: PCT/BG2018/000031
(87) International publication number: WO 2019/010549

(57) **Abstract**

An autonomous lifebuoy comprising of a body (1), a power supply unit (5) consisting of water-activated electric batteries and water propellers (2) which use the camera image of the closest smartphone to direct the lifebuoy towards the MOB. The Control unit (3) connects to the local area network and nearby smartphones. The invention is also equipped with a non-volatile memory in which an image of the lifebuoy itself and a MOB is pre-recorded, a GPU for comparing the pre-recorded image with the images obtained from the cameras of nearby smartphones, a microprocessor for calculation and issuing of commands to the water propellers.
Other pre-recorded information within the memory of the Control Unit (3) is:
- A human voice pronouncing the word "help" in many languages;
- Different kinds of marine noises;
- Sonar profile of underwater motion of a MOB.
The Control Unit (3) is wired to both water propellers (2) and the power supply unit (5).
In a MOB situation, when the victim is conscious of the surface of his water, the autonomous lifebuoy is thrown into the water (1).
The water activates the battery (5). It powers the Control Unit (3).
The sonar positioner (4) detects human body motions and position information and transmits it to the Control Unit (3) which controls the water propellers (2) to move the lifebuoy (1) automatically to the MOB.

## Description

### Field of the art

The invention relates to the international classification B63C9 / 08 - individual means of water rescue, in particular a lifebuoy.

### State of the art

The following patent solutions are known:
1. Remote controlled motorized lifebuoy -
   CN201124925Y; CN202828044U; CN203064186U; US 8882555 B2
2. Automatic lifebuoy - CN205440813U, equipped with an infrared positioning device, control module and power module all located in its body.
The infrared positioner detects the location of the human body and transmits the information to the control module that controls the electrical motors to reach the man over board (MOB).
These solutions have the following disadvantages:
Remote controlled lifebuoys:
- not practical in a critical MOB situation. The "remote control" must be nearby with charged batteries and all staff have to be specially trained to use it;
- need for regular maintenance;
The prototype - CN205440813U relies on an infrared sensor that is mounted on the lifebuoy and is elevated less than 10 cm above the surface of the water. The sensor must have direct vision in order to detect the heat of a person's head, but that is usually impossible as there are waves between the lifebuoy and the sensor.
These deficiencies reduce the consumer value of the known solutions and are one of the reasons for the poor dissemination of this technology.
Known priorities are described in the patents set forth above. None of them include the system outlined below.

### SUMMARY OF THE INVENTION

There are two main scenarios in water saving:
- the victim is conscious and above the surface (type 1);
- the victim is unconscious (type 2);

The second case always requires another person, or a rescue team, who are trained in water rescue to enter the water and extract the MOB.

The purpose of this invention is to provide a quick and credible rescuer to the crew in the first case when the MOB is conscious and above the surface. Another purpose of the invention is to eliminate the need of the rescue team to descend into the water and swim with a lifebuoy to the MOB.

The proposed solution is an Autonomous lifebuoy. The lifebuoy does not need an operator to control it and therefore there is no remote controller. In order to identify the MOB's location, the lifebuoy receives a live feed in the form of images from the closest camera or the nearest smartphone through the Internet or intranet. It then analyses those images and determines the MOB's location. This is possible because modern boats and yachts provide an Internet connection for crew members and guests via a WiFi hotspot. The lifebuoy will connects to the Internet via "Industry standard Maritime VSAT systems" or (in coastal areas) via 4G routers.

### WAY OF WORKING

Normally the "Autonomous lifebuoy" is located in a dry place on the ship. The battery is inactive. In a type 1 MOB situation the lifebuoy is thrown into the water. The water activates the battery which powers the Control Unit. The Control Unit calculated the location of the MOB and sets course towards them without any need of external interference.

### Justification of patentability

In order to calculate the location of the MOB the lifebuoy analyses the life feed it receives from nearby cameras. The Control Unit (3) receives the live feed over WiFi network that connects all devices on board - cameras and smartphones. When the Control Unit is activated (lifebuoy thrown into water) it send out a request to access the cameras and video recording equipment on all devices on the WiFi network.

The invention has two supportive systems that help pinpoint the precise location of the MOB once the lifebuoy within close range:
- acoustic system, looking for sounds similar to the word "help" in a variety of languages. The acoustic system also has noise reduction technology in order to operate efficiently in a noisy environment. It uses memorized profiles of different types of noise and includes 7 microphones located over the lifebuoy's periphery. "Voice Activity Detection" software works along with the "Noise reduction technology" in order to improve the signal / noise ratio (SNR) and recognise human voice.
- Sonar navigation - searches for the sonar profile of the underwater motion of a MOB who kicks and makes sharp movements in panic.

The design of the device has the following advantages over the prototype:
- guides the lifebuoy without external interference;
- delivers the rescue device in the fastest possible way.
The inventive device thus achieves the water-saving efficiency required.

The construction of the individual elements of the device at the time of the invention is known. However, the combination of the above mentioned features characterizing the proposed device is missing from the available information. Namely, this new combination of features allows for new, and previously unknown information to be obtained. This combination of device features gives new user and performance features that are absent in the prototype and eliminates its drawbacks.

### Invention level

The new qualities of this invention are the water-saving efficiency in a MOB type 1 situation.
These qualities are achieved due to the inclusion of the Control Unit. It ensures the achievement of the aforementioned objectives.
With this, in the author's opinion, the novelty and usefulness of the proposed device is provided.

### Clarification of the attached figures

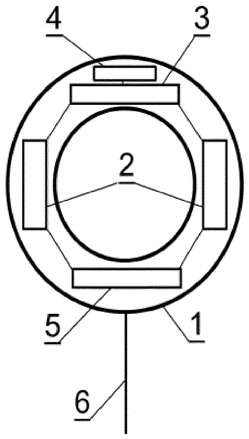

Fig. 1 is a schematic diagram of an autonomous lifebuoy.

### Reference numbers:

1. Lifebuoy body;
2. Water propellers;
3. Control unit which includes: one or more low-power wide-area network (LPWAN) such as LoRaWAN, NB-IoT, SigFox or other loT Network Solution; one or more Bluetooth, Wi-Fi, ZigBee, ANT or GSM communication module to connect to the nearby cameras, local area network and nearby smartphones, an non-volatile memory in which images of the lifebuoy itself and a MOB are pre-recorded, a microprocessor to compare the recorded image with the images obtained from nearby cameras and smartphones, a microprocessor for calculating and making commands to water propellers.
4. Sonar module;
5. Power unit - water-activated battery;
6. Vessel connection line;

### EXAMPLES OF THE INVENTION

An exemplary embodiment of the invention "Autonomous lifebuoy" is shown in Fig.1.

There are two water propellers (2) mounted on the left and right side of the body of the lifebuoy. They are located in L-shaped water channels through which the propellers suck water from beneath the lifebuoy and dispose of it through the other end of the channel. A water activated battery (5) starts operating when it comes in contact with water. It feeds the water propellers (2) and the Control Unit (3) with at least one communication module mounted on it for connection to the local area network (LAN) and smartphones, a non-volatile memory in which the image of the lifebuoy itself and the MOB is recorded, a GPU (graphics processing unit) for comparing the pre-recorded image with the images received from the live feed, microprocessor for calculating and issuing commands to the water propellers.

After throwing the lifebuoy into the water, the Control Unit sends a request to all devices in the LAN to turn on their cameras and start sharing a live feed. This ensures that the Control Unit receives images from a high point of view. After calculating the location of the MOB the Control Unit sends a signal to the water propellers to set course towards them. Then, if he does not reach the MOB, the lifebuoy continues in the same direction and searches with the Voice Activity Detector (VAD), which establishes the presence or absence of human speech in environmental sounds and with an Active Positioning Sonar (sonar navigation) that is pointing in the direction of human motion (direction opposite to the water propellers), which includes:
- sound emitter;
- Multiposition hydro-acoustic system with correlation processing of received signals;

This solution has the following advantages: everyone, at any time, carries the phone. 100 meters is the distance a WiFi signal can cover, but it is sufficient for the autonomous lifebuoy. In addition, real-time video (live feed) will be obtained that will be needed for further rescue or investigative actions.
The above description is only a preferred embodiment of the utility model and is not intended to limit the utility model. All modifications, equivalents, improvements and the like in the spirit and principles of the invention should be included within the scope of the invention.

### Application and use of invention

The invention may be industrially manufactured from cork, technical plastics or carbon composites. In a MOB situation the device offers a credible water lifesaving equipment to the lifeguards on board.

In a rescue operation by a dedicated team, the invention can save the team from having to go into the water and swim with the lifebuoy to the MOB.

The device is user-friendly. It was built on the basis of testing and analysis of the shortcomings of existing instruments selected for prototypes. The invention works the way described above. There can be many modifications to the proposed structure and way of working described above. Therefore, the applicant wishes to specify the following patent claims.

## Claims

1. An autonomous lifebuoy comprising a body (1), an electric power supply (5), a propelling module (2), and a control unit (3) that automatically directs the lifebuoy towards the MOB; wherein the control unit (3) is equipped with an memory chip that stores images of the lifebuoy itself and MOB (man overboard) alongside a comparative algorithm matching the stored images with the image feed from internet-connected cameras, intranet-connected cameras or the cameras of nearby smartphones.

2. The autonomous lifebuoy of claim 1, wherein the control unit (3) also comprises a Voice Activity Detector (VAD) and an algorithm analysing and matching nearby sounds to pre-recorded signatures of cries for help (Help, 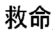 , 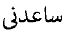 , pomogite, Hilf mir, Ayuda, Aidez moi, " 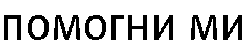 ") in all languages recognised by the UN.

3. The autonomous lifebuoy of claim 1, wherein the control unit (3) also comprises an ultrasound localisation module / device - a sonar (4).
